# EUROPÄISCHE PATENTSCHRIFT

(11) **EP 3 916 364 B1**
(45) Veröffentlichungstag und Bekanntmachung des Hinweises auf die Patenterteilung: **30.08.2023**
(21) Anmeldenummer: 21175218.3
(22) Anmeldetag: 21.05.2021
(51) Int. Cl.: G01F 1/58, H01F 7/20

(54) **MAGNETKREISVORRICHTUNG FÜR EIN MAGNETISCH-INDUKTIVES DURCHFLUSSMESSGERÄT UND VERFAHREN ZUR FERTIGUNG EINER MAGNETKREISVORRICHTUNG**
MAGNETIC CIRCUIT DEVICE FOR A MAGNETIC-INDUCTIVE FLOW METER AND METHOD FOR MANUFACTURING A MAGNETIC CIRCUIT DEVICE
DISPOSITIF DE CIRCUIT MAGNÉTIQUE POUR UN DÉBITMÈTRE MAGNÉTIQUE-INDUCTIF ET PROCÉDÉ DE FABRICATION D'UN DISPOSITIF DE CIRCUIT MAGNÉTIQUE

(30) Priorität: 26.05.2020 DE 102020114056
(43) Veröffentlichungstag der Anmeldung: 01.12.2021
(73) Patentinhaber: Krohne AG, 4019 Basel (CH)
(72) Erfinder: Neven, Joseph, 26100 Romans (FR); Paul, Christian, 3069 HP Rotterdam (NL)
(74) Vertreter: Gesthuysen Patentanwälte

(56) Entgegenhaltungen:
- EP-A1- 1 674 836
- WO-A1-2014/205164
- WO-A1-2016/141385
- DE-U1- 20 100 213
- GB-A- 1 213 841
- US-A- 3 605 726

## Beschreibung

Die Erfindung betrifft eine Magnetkreisvorrichtung für ein magnetisch-induktives Durchflussmessgerät gemäß dem Oberbegriff des Patentanspruchs 1. Zudem betrifft die Erfindung ein Verfahren zur Fertigung einer Magnetkreisvorrichtung.

Magnetkreisvorrichtungen sind in einer Vielzahl aus dem Stand der Technik bekannt und dienen dazu, ein homogenes Magnetfeld zu erzeugen. Für eine magnetisch-induktive Durchflussmessung ist ein Magnetfeld essenziell, da das Messprinzip auf der Ladungstrennung bewegter Ladungen in einem Magnetfeld beruht.

Magnetkreisvorrichtungen weisen wenigstens eine das Magnetfeld erzeugende Spule auf. In der Spule ist oftmals ein Spulenkern angeordnet. Das erzeugte Magnetfeld wird meist über magnetfeldführende Elemente zu den Polschuhen geführt. Die Polschuhe dienen dazu, die Magnetfeldlinien des Magnetfeldes in definierter Art und Weise aus dem Magnetkreis austreten zu lassen; der Raum zwischen den Polschuhen wird von dem Magnetfeld durchsetzt. Bevorzugt werden die Polschuhe bei magnetisch-induktiven Durchflussmessgeräten durch Polschuhplatten realisiert, die eine relativ geringe Dicke aufweisen, sodass im Folgenden von Polschuhplatten die Rede ist. Die Erfindung ist jedoch auch auf andere Formen von Polschuhen übertragbar.

Eine Magnetkreisvorrichtung für ein magnetisch-induktives Durchflussmessgerät ist beispielsweise aus der EP 2 479 541 A1 bekannt. Die Magnetkreisvorrichtung weist eine Spule und zwei Polplatten auf, wobei die Spule mit einer Polplatte unmittelbar verbunden ist und mit der zweiten Polplatte über zwei bogenförmig ausgebildete Verbindungselemente verbunden ist. Die Magnetkreisvorrichtung weist somit insgesamt eine ringförmige Außenkontur auf. Nachteilig an der aus dem Stand der Technik bekannten Magnetkreisvorrichtung ist, dass sie aufgrund ihrer geometrischen Ausgestaltung in ihren Einsatzmöglichkeiten begrenzt ist.

Auch aus der DE 10 2017 131 202 A1 und aus der DE 10 2018 125 865 A1 sind Magnetkreisvorrichtungen für magnetisch-induktive Durchflussmessgeräte bekannt. Die Magnetkreisvorrichtungen weisen Spulen und Spulenkerne auf, wobei die Spulenkerne durch Blechelemente realisiert sind. Bei der Fertigung der Magnetkreisvorrichtung werden die Blechelemente in die entsprechende Form gebogen und verbleiben in ihrer Position. Die fertig gebogene Magnetkreisvorrichtung wird dann zur Montage des gesamten magnetisch-induktiven Durchflussmessgerätes freigegeben, wobei bei der Montage des Durchflussmessgerätes selbst die Magnetkreisvorrichtung in ihrer Form verbleibt. Nachteilig hieran ist, dass die Magnetkreisvorrichtungen nicht variabel eingesetzt werden können, da ihre Maße mit der Fertigung der Magnetkreisvorrichtungen festgelegt werden. Die Magnetkreisvorrichtungen sind also beispielsweise für eine vorgegebene Dimensionierung des Messrohres gefertigt. Zudem ist das Material für die Magnetkreisvorrichtungen derart gewählt, dass es nach Fertigung der Magnetkreisvorrichtungen nicht ohne grö-βeren Aufwand außer Form gebogen werden kann. Hierdurch wird verhindert, dass eine Beschädigung der Magnetkreisvorrichtung beispielsweise bei einem Transport erfolgen kann.

Aus der US 3,605,726 ist ein magnetisch-induktives Durchflussmessgerät für den Einsatz im medizinischen Bereich bekannt. Um den Blutfluss durch Adern oder Organe während oder nach einer Operation zu messen, wird eine flexible Magnetkreisvorrichtung bestehend aus einem flexiblen Spulenkern und um den Spulenkern gewickelten Spulenwindungen um die Adern oder Organe gewickelt. Die sich innerhalb des Körpers befindende Magnetkreisvorrichtung wird mit einer außerhalb des Körpers angeordneten Messvorrichtung verbunden.

Der Erfindung liegt die Aufgabe zugrunde, eine Magnetkreisvorrichtung und eine Spulenanordnung für eine Magnetkreisvorrichtung anzugeben, die einen erhöhten Anwendungsbereich ermöglichen, insbesondere die flexibel an die Geometrien des jeweiligen magnetisch-induktiven Durchflussmessgerätes anpassbar sind.

Die Aufgabe ist bei der vorliegenden Erfindung zunächst und im Wesentlichen mit den Merkmalen des Kennzeichnungsteils des Patentanspruchs 1 gelöst.

Bei der Magnetkreisvorrichtung ist der Spulenkern flexibel ausgestaltet, derart dass die Spulenanordnung von einer ersten Form in eine zweite Form verbiegbar ist. Erfindungsgemäß weist die Magnetkreisvorrichtung zwei Polplatten auf und ist der Spulenkern zumindest mittelbar mit den Polplatten verbunden.

Wenn es heißt, dass der Spulenkern flexibel ausgestaltet ist, dann ist damit gemeint, dass der Spulenkern aus einem biegbaren Material gefertigt ist.

Biegbar bedeutet hier, dass das Material sowohl seiner Stärke und seinen Abmessungen nach als auch seiner Materialbeschaffenheit nach derart gewählt ist, dass es biegbar ist und so ein flexibler Spulenkern realisiert ist. Insbesondere ist hierunter zu verstehen, dass die Spulenanordnung auch nach ihrer Fertigung ohne großen Aufwand gebogen werden kann. Die Spulenanordnung ist explizit dafür ausgelegt, bei ihrer Montage in ein magnetisch-induktives Durchflussmessgerät verbogen zu werden und an die Dimensionen des magnetisch-induktiven Durchflussmessgerätes angepasst zu werden. Für die Herstellung des Spulenkerns eignet sich entsprechend nicht jedes beliebige Material. Insbesondere darf das Material nicht spröde sein, da der Spulenkern beim Biegen sonst brechen würde. Das Material muss so gewählt werden, dass es beliebig oft zerstörungsfrei von einer ersten Form in eine zweite Form biegbar ist.

Es ist erkannt worden, dass die Verwendung eines flexiblen Spulenkerns die Anwendungsmöglichkeiten und Verwendungsmöglichkeiten einer Magnetkreisvorrichtung erheblich verbessert. Insbesondere kann auch die Montage eines kompletten magnetisch-induktiven Durchflussmessgerätes erheblich vereinfacht werden, wenn die Magnetkreisvorrichtung aufgrund der flexibel verbiegbaren Spule von einer Form in eine andere Form gebogen werden kann.

In einer besonders bevorzugten Ausgestaltung ist der Spulenkern federnd ausgestaltet. Der Spulenkern ist dann nicht nur von einer ersten Form in eine zweite Form verbiegbar. Vielmehr ist der Spulenkern in seiner zweiten Form in einem entspannten Zustand und ist weiter in einen vorgespannten Zustand verbringbar. Bevorzugt kann der Spulenkern in dem vorgespannten Zustand fixiert oder gehalten werden. Entfällt die Fixierung oder Halterung, so geht der Spulenkern wieder in seinen entspannten Zustand über.

Erfindungsgemäß ist erkannt worden, dass sich als Material für den Spulenkern ein weiches Material besonders anbietet. In einer ganz besonders bevorzugten Ausgestaltung ist der Spulenkern aus einer Nickel-Eisen-Legierung gefertigt. In einer ganz besonders bevorzugten Ausgestaltung ist der Spulenkern aus einer Nickel-Eisen-Legierung hergestellt, die 50 Prozent Nickel und 50 Prozent Eisen aufweist. Die Erfindung ist jedoch nicht auf diese Zusammensetzung begrenzt. In weiteren bevorzugten Ausgestaltungen ist der Eisenanteil größer als 50 Prozent oder kleiner als 50 Prozent.

In einer weiteren Ausgestaltung ist der Spulenkern aus weichem Eisen hergestellt.

Neben der Art des Materials des Spulenkerns sind ebenfalls die Abmessungen bzw. die Geometrie des Spulenkerns von erheblicher Bedeutung für die Erfindung. In einer ganz besonders bevorzugten Variante weist der Spulenkern eine Länge auf, die größer als acht mal der Durchmesser des Spulenkerns ist. Mit einem solchen Spulenkern lässt sich bei entsprechender Wicklung eine sogenannte lange Spule realisieren. Unter einer langen Spule ist also eine derartige Spule zu verstehen, deren Länge wesentlich größer ist als deren Durchmesser. Insbesondere sind derartige Spulen bevorzugt, bei denen die Länge der Spule wenigstens dem Achtfachen des Durchmessers entspricht. Lange Spulen weisen gegenüber kurzen Spulen, deren Länge in der gleichen Größenordnung wie der Spulenradius liegt, den Vorteil auf, dass das Magnetfeld im Inneren der Spule homogen ist, bzw. deutlich homogener als das Magnetfeld im Inneren einer kurzen Spule ist. Zudem treten bei langen Spulen deutlich geringere unerwünschte Streufelder auf. Hierdurch können streufeldbedingte Energieverluste minimiert werden. Zudem kann durch die Verwendung von langen Spulen die Störanfälligkeit gegenüber Streufeldern reduziert werden. Aufgrund der deutlich geringeren Streufelder können Abschirmmaßnahmen zum Abschirmen der Streufelder vereinfacht realisiert werden oder kann auf die Verwendung von Abschirmmaßnahmen zum Abschirmen der Streufelder verzichtet werden.

In einer ganz besonders bevorzugten Ausgestaltung weist der Spulenkern einen Durchmesser von 2,5 mm und eine Länge von 20 mm auf. Weiter bevorzugt ist der Spulenkern durch einen Draht mit bevorzugt rundem Querschnitt realisiert.

Um bei der Wicklung der Spule einen möglichst hohen Füllfaktor zu erreichen, ist in einer besonderen Ausgestaltung der erfindungsgemäßen Magnetkreisvorrichtung vorgesehen, dass die Spule orthozyklisch gewickelt ist. Eine orthozyklische Wicklung zeichnet sich dadurch aus, dass die Windungen einer oberen Wicklungslage in den Tälern einer unteren Wicklungslage angeordnet sind.

In einer bevorzugten Variante ist die Spule aus isoliertem Spulendraht gefertigt. Besonders bevorzugt ist die Spule aus isoliertem Kupferdraht gefertigt. Kupferdraht zeichnet sich durch eine sehr gute elektrische Leitfähigkeit aus.

Erfindungsgemäß ist erkannt worden, dass die Flexibilität der Spulenanordnung dadurch weiter erhöht wird, dass die Isolierung des Spulendrahtes nach dem Wickeln der Spule zumindest teilweise durch Erwärmen aufgeschmolzen wird. Nach dem Abkühlen weist die Spulenanordnung ein im Vergleich zu vor dem Erwärmen erhöhtes Maß an Flexibilität auf. Das wird dadurch erreicht, dass durch das Erwärmen des isolierten Drahtes ein Teil der Isolierung zerstört wird, sodass die Isolierschichtdicke verringert wird.

Wie einleitend beschrieben, weist eine Magnetkreisvorrichtung in der Regel zwei Polplatten auf, zwischen denen sich ein Magnetfeld ausbildet. Die erfindungsgemäße Magnetkreisvorrichtung weist zwei Polplatten auf. Erfindungsgemäß ist der flexible Spulenkern zumindest mittelbar mit den Polplatten verbunden. Wenn es heißt, dass der Spulenkern zumindest mittelbar mit den Polplatten verbunden ist, dann können insbesondere das von der Spule erzeugte Magnetfeld führende Jochelemente vorgesehen sein, die den Spulenkern mit den Polschuhen verbinden. Um jedoch die Flexibilität der Magnetkreisvorrichtung nicht durch- insbesondere starr ausgebildete - Jochelemente zu verringern, ist in einer ganz besonders bevorzugten Variante vorgesehen, dass der Spulenkern direkt mit den Polplatten verbunden ist. Das kann beispielsweise dadurch realisiert sein, dass die Enden des Spulenkerns mit den Polplatten verschweißt sind. Hier bieten sich jedoch auch weitere aus dem Stand der Technik bekannte Verbindungstechniken an. Bei einer derartigen Ausgestaltung sind lediglich die Polplatten starr ausgebildet. Die einzig durch die Spule bzw. den Spulenkern realisierte Verbindung zwischen den beiden Polplatten ist flexibel realisiert, sodass sich die beiden Polplatten durch Biegen der Spule in eine Vielzahl von relativen Anordnungen zueinander bringen lassen.

Zudem betrifft die Erfindung ein Verfahren zur Fertigung einer Magnetkreisvorrichtung für ein magnetisch-induktives Durchflussmessgerät, wobei die Magnetkreisvorrichtung eine Spule mit einem Spulenkern aufweist und zwei Polplatten aufweist. Das erfindungsgemäße Verfahren zeichnet sich dadurch aus, dass in einem Bereitstellungsschritt der Spulenkern aus einem flexiblen Material bereitgestellt wird, dass in einem Wicklungsschritt N Windungen isolierter Spulendraht um den Spulenkern gewickelt werden und dass in einem Verbindungsschritt der Spulenkern mit den Polplatten verbunden wird.

Erfindungsgemäß ist erkannt worden, dass durch die Bereitstellung eines flexiblen Spulenkerns die Magnetkreisvorrichtung flexibel realisiert werden kann. Hierdurch ergibt sich die Möglichkeit, die Spule der Magnetkreisvorrichtung von einer ersten Form in eine zweite Form zu verbiegen. Eine entsprechende Magnetkreisvorrichtung kann so optimal an die geometrischen Gegebenheiten des magnetisch-induktiven Durchflussmessgerätes angepasst werden, und zwar auch im Nachhinein.

In einer besonders bevorzugten Weiterbildung wird in einem Aufheizschritt die Spule aufgeheizt, derart, dass die Isolierung des Spulendrahtes zumindest teilweise aufschmilzt. Es ist erkannt worden, dass die Flexibilität der Spule der Magnetkreisvorrichtung und damit die Flexibilität der Magnetkreisvorrichtung durch einen Aufheizschritt weiter erhöht werden kann.

Der Aufheizschritt kann auf verschiedene Art und Weise realisiert werden. In einer bevorzugten Variante wird der Aufheizschritt dadurch realisiert, dass ein Strom durch den Spulendraht geleitet wird. Die Stromstärke wird derart gewählt, dass durch das Aufheizen die Isolation des Spulendrahtes zumindest teilweise aufschmilzt.

In einer alternativen Variante wird der Aufheizschritt durch induktives Erwärmen realisiert.

Eine Weiterbildung des erfindungsgemäßen Verfahrens zeichnet sich dadurch aus, dass in einem zusätzlichen Biegeschritt die Magnetkreisvorrichtung von einer ersten Form in eine zweite Form gebogen wird. Der zusätzliche Biegeschritt wird bevorzugt nach dem Verbindungsschritt durchgeführt. In einer alternativen Variante wird der Biegeschritt vor dem Verbindungsschritt durchgeführt, also durchgeführt, bevor der Spulenkern mit den Polschuhplatten zumindest mittelbar verbunden wird.

In einem weiteren Verfahrensschritt wird in einer weiteren Ausführungsform des erfindungsgemäßen Verfahrens in einem Fixierschritt die Magnetkreisvorrichtung in einer finalen Form fixiert. Hierzu wird ein Fixierhilfsmittel verwendet. Insbesondere werden im Fixierschritt die Enden des Spulenkerns in einer finalen Form fixiert. Diese Variante weist den Vorteil auf, dass die Magnetkreisvorrichtung dann, wenn sie einmal in einer finalen Form gebogen ist, nicht mehr aus Versehen umgebogen werden kann. In der finalen Form der Magnetkreisvorrichtung weist bevorzugt das Magnetfeld die größtmögliche Homogenität und die gewünschte Magnetfeldstärke auf.

Im Einzelnen gibt es eine Vielzahl an Möglichkeiten, die erfindungsgemäße Magnetkreisvorrichtung, die erfindungsgemäße Spule und das erfindungsgemäße Verfahren auszugestalten und weiterzubilden. Hierzu wird verwiesen auf die den unabhängigen Patentansprüchen nachgeordneten Patentansprüche sowie auf die Beschreibung bevorzugter Ausgestaltung in Verbindung mit der Zeichnung. In der Zeichnung zeigen
- Fig. 1: eine erste Ausgestaltung einer Magnetkreisvorrichtung,
- Fig. 2a: eine zweite Magnetkreisvorrichtung in einer ersten Form,
- Fig. 2b: die Magnetkreisvorrichtung aus Fig. 2a in einer zweiten Form,
- Fig. 3: eine dritte Ausgestaltung einer Magnetkreisvorrichtung,
- Fig. 4: eine schematische Darstellung einer Spule einer Magnetkreisvorrichtung,
- Fig. 5: ein Blockdiagramm eines ersten Verfahrens zur Montage einer Magnetkreisvorrichtung und
- Fig. 6: ein Blockdiagramm eines zweiten Verfahrens zur Montage einer Magnetkreisvorrichtung.

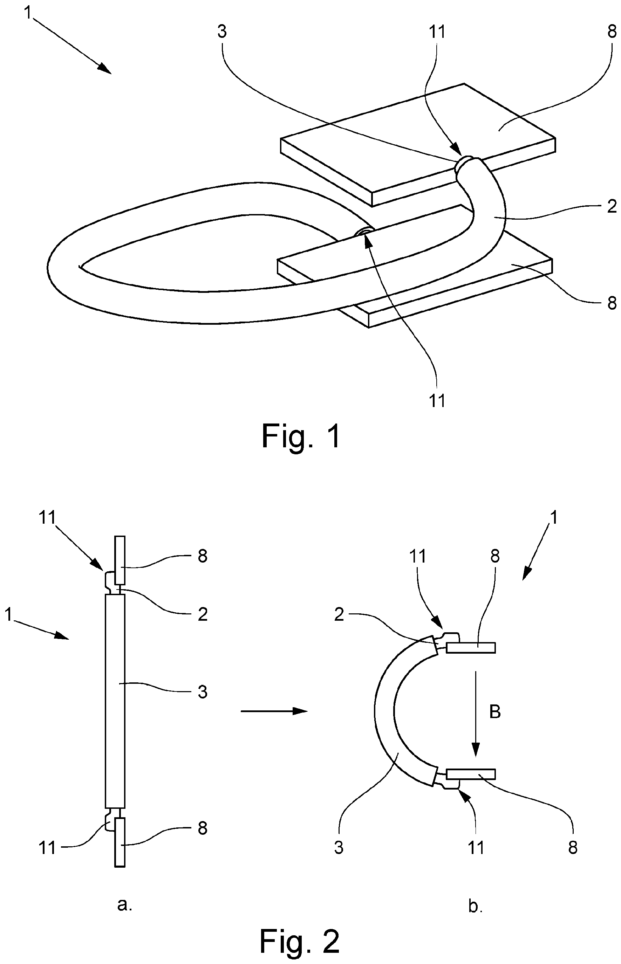

Fig. 1 zeigt eine Magnetkreisvorrichtung 1 für ein magnetisch-induktives Durchflussmessgerät, welches selbst nicht dargestellt ist. Die Magnetkreisvorrichtung 1 weist eine Spule 2 auf. Die Spule 2 wird durch um einen Spulenkern 3 gewickelte Windungen aus einem isolierten Kupferdraht hergestellt. Der in der Spule 2 angeordnete Spulenkern 3 ist flexibel ausgestaltet, derart, dass die Spulenanordnung bestehend aus Spule 2 und Spulenkern 3 von einer ersten Form in eine zweite Form verbiegbar ist. In der dargestellten Ausgestaltung ist der Spulenkern aus einer Nickel-Eisen-Legierung realisiert. Bei Nickel-Eisen-Legierungen handelt es sich um sehr weiche Metalllegierungen, die das Verbiegen des Spulenkerns 3 vereinfachen. Wichtig bei der Wahl des Materials des Spulenkerns 3 ist, dass das Material beim Verbiegen nicht zerstört wird, beispielsweise bricht. Zudem weist die verwendete Nickel-Eisen-Legierung eine hohe Permeabilität auf und eignet sich so in besonderer Weise als Material für einen Spulenkern 3.

In den Fig. 2a und 2b ist eine Magnetkreisvorrichtung 1 dargestellt, wobei in der Darstellung der Fig. 2a die Spulenanordnung aus Spule 2 und Spulenkern 3 in einer ersten Form gebogen ist und in der Fig. 2b die Spulenanordnung aus Spule 2 und Spulenkern 3 in einer zweiten Form gebogen ist. In Fig. 2a erstreckt sich die Spule entlang ihrer Längsachse, wobei die Längsachse der Spulenachse entspricht. In Fig. 2b ist die Spulenanordnung U-förmig gebogen. Dies ist aufgrund der Flexibilität des Spulenkerns 3 möglich. Der Spulenkern 3 weist in dem dargestellten Ausführungsbeispiel eine derartige Flexibilität auf, dass die Spulenanordnung aus Spule 2 und Spulenkern 3 zwar von einer Form in eine andere Form verbiegbar ist, jedoch nach dem Biegevorgang auch in der Form verbleibt.

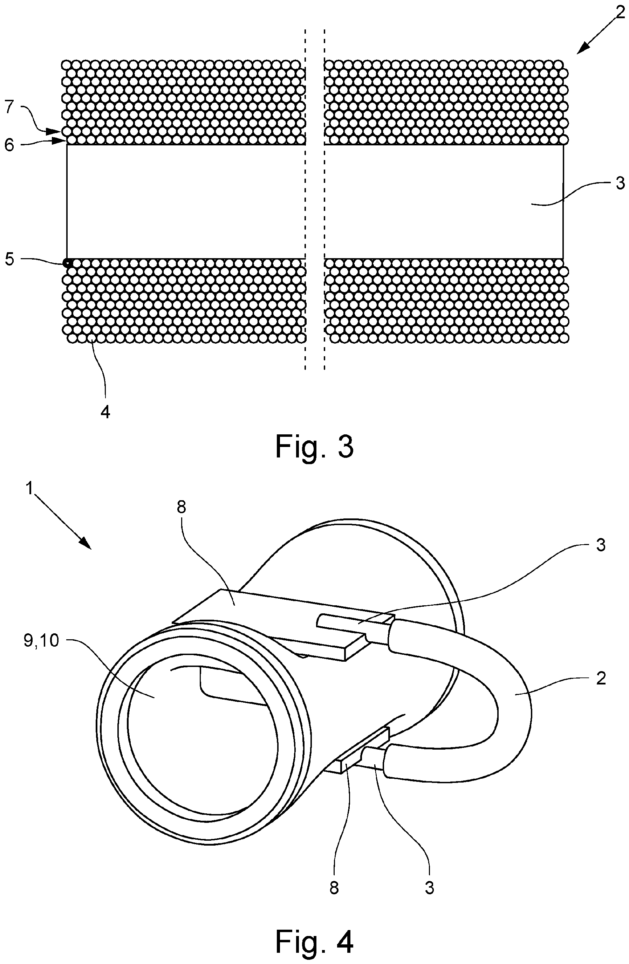

Um eine lange Spule 2 zu realisieren, weist der Spulenkern 3 eine Länge L auf, die wenigstens dem achtfachen der Dicke D des Spulenkerns entspricht. Der Spulenkern 3 ist mit einem Spulendraht 4 umwickelt, wobei der Spulendraht 4 eine Dicke d aufweist. Ein Querschnitt durch eine gewickelte Spule 2 ist in Fig. 3 dargestellt. Hier ist der Spulenkern 3 mit seiner Dicke D und seiner Länge L ersichtlich, der von dem Spulendraht 4 umwickelt ist. Der Spulendraht 4 weist eine Isolierung 5 auf, die aus Übersichtsgründen nur äußerst schematisch in einem einzigen Spulendrahtquerschnitt gezeigt ist.

Die Spule 2 ist orthozyklisch gewickelt, sodass ein maximaler Füllfaktor erreicht wird. Bei der orthozyklischen Wicklung sind die Windungen einer Windungslage 6 in den Tälern der vorhergehenden Windungslage 7 abgelegt. Die in Fig. 3 dargestellte Spule weist 10 Windungslagen auf. Eine Windungslage weist 100 Windungen auf, sodass die dargestellte Spule insgesamt 1000 Windungen aufweist. Der Übersicht halber ist nur ein Teil der Spule 2 dargestellt.

Der Spulenkern weist eine Dicke D von 2,5 mm auf und eine Länge L von 20 mm auf. Der Spulendraht 4 weist eine Dicke d von 0,2 mm auf. Bei einer solchen Ausgestaltung weist der Spulendraht 4 entsprechend eine ungefähre Länge von 14 m auf. So lässt sich auf besonders elegante Art und Weise eine dünne lange Spule mit einem minimalen Streufeld und einem minimalen Energieverlust realisieren.

Die Spule 2 ist nach dem Wickeln durch Aufheizen erwärmt worden, wodurch die Isolierung 5 zumindest teilweise aufgeschmolzen ist. So ist die Flexibilität der Spule 2 erhöht worden. Nachdem die Spule 2 also wieder abgekühlt ist, weist sie eine höhere Flexibilität auf als vor dem Aufwärmvorgang.

Wie in den Fig. 1, 2a, 2b und 4 zu sehen, weist die Magnetkreisvorrichtung 1 eben der Spulenanordnung zwei Polplatten 4 auf. Zwischen den Polplatten 8 baut sich das Magnetfeld B der Spule 2 auf. Zwischen den Polplatten 8 ist das Messrohr 9 des magnetisch-induktiven Durchflussmessgerätes angeordnet, wie in Fig. 4 dargestellt. Durch das Messrohr 9 strömt das zu vermessende elektrisch leitfähige Medium. Das Messrohr 9 dient zusätzlich als Fixierhilfsmittel 10, um die gebogene Spulenanordnung in ihrer finalen Form zu fixieren.

Der Spulenkern 3 der Spule 2 ist in den dargestellten Ausgestaltungen unmittelbar mit den Polplatten 8 verbunden. Das ist dadurch realisiert, dass die Enden 11 des Spulenkerns 3 mit den Polplatten 8 verschweißt sind.

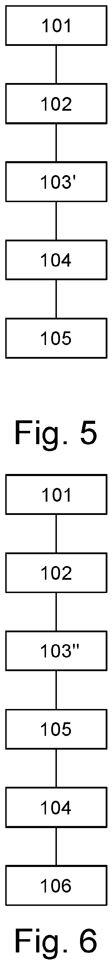

Fig. 5 zeigt ein Blockdiagramm eines Verfahrens 100 zur Fertigung einer Magnetkreisvorrichtung 1. In einem Bereitstellungsschritt 101 wird ein flexibler Spulenkern bereitgestellt. Wenn die Rede von einem flexiblen Spulenkern ist, dann ist damit ein solcher Spulenkern gemeint, der aus einem biegbaren Material gefertigt ist und eine solche Geometrie aufweist, die ein Biegen des Spulenkerns ermöglicht. In einem auf den Bereitstellungsschritt 101 folgenden Wicklungsschritt 102 werden N Windungen von isoliertem Spulendraht um den Spulenkern gewickelt. In einem Aufheizschritt 103 wird die Spule aufgeheizt, derart, dass die Isolierung des Spulendrahtes zumindest teilweise aufschmilzt. Hierdurch wird die Flexibilität der wieder abgekühlten Spule vergrößert. In der dargestellten Ausführungsform des Verfahrens 100 wird der Aufheizschritt 103 durch Durchleiten eines Stroms durch die Spule erreicht. Die Art des Aufheizschritts 103 ist mit dem Bezugszeichen 103' gekennzeichnet. In einem Verbindungsschritt 104 wird der Spulenkern mit den Polplatten verbunden. Das ist vorliegend dadurch realisiert, dass die Enden des Spulenkerns mit den Polplatten verschweißt werden. Zudem schließt sich an den Verbindungsschritt 104 ein Biegeschritt 105 an, in dem die Spulenanordnung bzw. die Magnetkreisvorrichtung in eine finale Form gebogen wird.

Eine Abwandlung des Verfahrens 100 ist in Fig. 6 gezeigt. Das hier dargestellte Verfahren unterscheidet sich dadurch, dass der Aufheizschritt durch induktives Erwärmen realisiert wird, was durch das Bezugszeichen 103" verdeutlicht wird. Zudem wird der Biegeschritt 105 vor dem Verbindungsschritt 104 durchgeführt. In einem finalen Fixierschritt 106 werden die Enden des Spulenkerns mit Hilfe eines Fixierhilfsmittels in ihrer finalen Form fixiert. Hierdurch wird verhindert, dass die gebogene Magnetkreisvorrichtung unbeabsichtigt in eine andere Form gebogen wird, wodurch sich gegebenenfalls das ausbildende Magnetfeld verändern könnte.

### Bezugszeichen

- 1: Magnetkreisvorrichtung
- 2: Spule
- 3: Spulenkern
- 4: Spulendraht
- 5: Isolierung
- 6: Wicklungslage
- 7: auf die Wicklungslage 6 folgende Wicklungslage
- 8: Polplatten
- 9: Messrohr
- 10: Fixierhilfsmittel
- 11: Enden des Spulenkerns

- 100: Verfahren
- 101: Bereitstellungsschritt
- 102: Wicklungsschritt
- 103: Aufheizschritt
- 103': Aufheizschritt durch Spulenstrom
- 103": Aufheizschritt durch induktives Erwärmen
- 104: Verbindungsschritt
- 105: Biegeschritt
- 106: Fixierschritt

## Patentansprüche

1. Magnetkreisvorrichtung (1) für ein magnetisch-induktives Durchflussmessgerät, mit einer eine Spule (2) und einen in der Spule (2) angeordneten Spulenkern (3) aufweisenden Spulenanordnung, wobei der Spulenkern (3) flexibel ausgestaltet ist, derart dass die Spulenanordnung von einer ersten Form in eine zweite Form verbiegbar ist, wobei die Magnetkreisvorrichtung (1) zwei Polplatten (8) aufweist und der Spulenkern (3) zumindest mittelbar mit den Polplatten (8) verbunden ist.

2. Magnetkreisvorrichtung (1) nach Anspruch 1, **dadurch gekennzeichnet, dass** der Spulenkern (3) federnd ausgestaltet ist, wobei der Spulenkern in seiner zweiten Form in einem entspannten Zustand ist und in einen vorgespannten Zustand verbringbar ist.

3. Magnetkreisvorrichtung (1) nach Anspruch 1 oder 2, **dadurch gekennzeichnet, dass** der Spulenkern (3) aus einer Nickel-Eisen-Legierung gefertigt ist oder dass der Spulenkern (3) aus weichem Eisen gefertigt ist.

4. Magnetkreisvorrichtung (1) nach einem der Ansprüche 1 bis 3, **dadurch gekennzeichnet, dass** der Spulenkern (3) eine Länge L aufweist, die größer als acht mal der Durchmesser D des Spulenkerns (3) ist, insbesondere dass der Spulenkern (3) einen Durchmesser D von 2,5 mm aufweist und eine Länge L von 20 mm aufweist.

5. Magnetkreisvorrichtung (1) nach einem der Ansprüche 1 bis 4, **dadurch gekennzeichnet, dass** die Spule (2) orthozyklisch gewickelt ist.

6. Magnetkreisvorrichtung (1) nach einem der Ansprüche 1 bis 5, **dadurch gekennzeichnet, dass** die Spule (2) aus isoliertem Spulendraht (4) gefertigt ist, insbesondere aus isoliertem Kupferdraht, wobei die Isolierung (5) des Spulendrahtes (4) nach dem Wickeln der Spule (2) zumindest teilweise durch Erwärmen aufgeschmolzen ist, derart, dass die Flexibilität der Spule (2) nach dem Erwärmen erhöht ist.

7. Magnetkreisvorrichtung (1) nach einem der Ansprüche 1 bis 6, **dadurch gekennzeichnet, dass** der Spulenkern (3) direkt mit den Polplatten (8) verbunden ist, insbesondere dass die Enden (11) des Spulenkerns (3) mit den Polplatten (8) verschweißt sind.

8. Verfahren (100) zur Fertigung einer Magnetkreisvorrichtung für ein magnetisch-induktives Durchflussmessgerät, wobei die Magnetkreisvorrichtung eine Spule mit einem Spulenkern aufweist und zwei Polplatten (8) aufweist,
wobei in einem Bereitstellungsschritt (101) ein flexibler Spulenkern bereitgestellt wird,
wobei in einem Wicklungsschritt (102) N Windungen isolierter Spulendraht um den Spulenkern gewickelt werden und
wobei in einem Verbindungsschritt (104) der Spulenkern mit den Polplatten verbunden wird.

9. Verfahren (100) nach Anspruch 8, **dadurch gekennzeichnet, dass** in einem Aufheizschritt (103) die Spule aufgeheizt wird, derart, dass die Isolierung des Spulendrahtes zumindest teilweise aufschmilzt.

10. Verfahren (100) nach Anspruch 9, **dadurch gekennzeichnet, dass** der Aufheizschritt (103) durch Durchleiten eines Stromes durch den Spulendraht (103') oder durch induktives Erwärmen (103") realisiert wird.

11. Verfahren (100) nach einem der Ansprüche 8 bis 10, **dadurch gekennzeichnet, dass** in einem zusätzlichen Biegeschritt (105) die Magnetkreisvorrichtung von einer ersten Form in eine zweite Form gebogen wird.

12. Verfahren (100) nach einem der Ansprüche 8 bis 11, **dadurch gekennzeichnet, dass** in einem Fixierschritt (106) die Magnetkreisvorrichtung, insbesondere die Enden des Spulenkerns, durch ein Fixierhilfsmittel in einer finalen Form fixiert wird.

## Claims

1. Magnetic circuit device (1) for a magnetic-inductive flowmeter, having a coil arrangement comprising a coil (2) and a coil core (3) arranged in the coil (2), wherein the coil core (3) is designed to be flexible, such that the coil arrangement can be bent from a first shape into a second shape, wherein the magnetic circuit device (1) has two pole plates (8) and that the coil core (3) is connected at least indirectly to the pole plates (8).

2. Magnetic circuit device (1) according to claim 1, **characterized in that** the coil core (3) is springly configured, wherein the coil core (3) in its second form is in a relaxed state and can be brought into a preloaded state.

3. Magnetic circuit device (1) according to claim 1 or 2, **characterized in that** the coil core (3) is made of a nickel-iron alloy, or that the coil core (3) is made of soft iron.

4. Magnetic circuit device (1) according to any one of claims 1 to 3, **characterized in that** the coil core (3) has a length L which is greater than eight times the diameter D of the coil core (3), in particular that the coil core (3) has a diameter D of 2.5 mm and has a length L of 20 mm.

5. Magnetic circuit device (1) according to any one of claims 1 to 4, **characterized in that** the coil (2) is orthocyclically wound.

6. Magnetic circuit device (1) according to any one of claims 1 to 5, **characterized in that** the coil (2) is made of insulated coil wire (4), in particular of insulated copper wire, wherein the insulation (5) of the coil wire (4) is at least partially melted by heating after the coil (2) has been wound, in such a way that the flexibility of the coil (2) is increased after heating.

7. Magnetic circuit device (1) according to one of claims 1 to 6, **characterized in that** the coil core (3) is connected directly to the pole plates (8), in particular that the ends (11) of the coil core (3) are welded to the pole plates (8).

8. Method (100) for manufacturing a magnetic circuit device for a magnetic-inductive flowmeter, wherein the magnetic circuit device comprises a coil with a coil core and two pole plates (8),
wherein a flexible coil core is provided in a provisioning step (101),
wherein N windings of insulated coil wire are wound around the coil core in one winding step (102) and
wherein in a connecting step (104) the coil core is connected to the pole plates.

9. Method (100) according to claim 8, **characterized in that** the coil is heated in a heating step (103) such that the insulation of the coil wire at least partially melts.

10. Method (100) according to claim 9, **characterized in that** the heating step (103) is implemented by passing a current through the coil wire (103') or by inductive heating (103").

11. Method (100) according to any one of claims 8 to 10, **characterized in that** in an additional bending step (105) the magnetic circuit device is bent from a first shape into a second shape.

12. Method (100) according to any one of claims 8 to 11, **characterized in that** in a fixing step (106) the magnetic circuit device, in particular the ends of the coil core, is fixed in a final shape by a fixing means.

## Revendications

1. Dispositif de circuit magnétique (1) pour un débitmètre magnéto-inductif, avec un agencement de bobines présentant une bobine (2) et un noyau de bobine (3) disposé dans la bobine (2), le noyau de bobine (3) étant conçu de manière à être flexible, de sorte que l'agencement de bobines peut être déformé d'une première forme en une deuxième forme, le dispositif de circuit magnétique (1) présentant deux plaques polaires (8) et le noyau de bobine (3) étant relié au moins indirectement aux plaques polaires (8).

2. Dispositif de circuit magnétique (1) selon la revendication 1, **caractérisé en ce que** le noyau de bobine (3) est conçu de manière à être élastique, le noyau de bobine étant dans sa deuxième forme dans un état détendu et étant apte à être amené dans un état précontraint.

3. Dispositif de circuit magnétique (1) selon la revendication 1 ou 2, **caractérisé en ce que** le noyau de bobine (3) est fabriqué en un alliage de nickel et de fer ou **en ce que** le noyau de bobine (3) est fabriqué en fer doux.

4. Dispositif de circuit magnétique (1) selon l'une des revendications 1 à 3, **caractérisé en ce que** le noyau de bobine (3) présente une longueur L qui est supérieure à huit fois le diamètre D du noyau de bobine (3), en particulier **en ce que** le noyau de bobine (3) présente un diamètre D de 2,5 mm et une longueur L de 20 mm.

5. Dispositif de circuit magnétique (1) selon l'une des revendications 1 à 4, **caractérisé en ce que** la bobine (2) est enroulée de manière orthocyclique.

6. Dispositif de circuit magnétique (1) selon l'une des revendications 1 à 5, **caractérisé en ce que** la bobine (2) est réalisée en fil de bobinage isolé (4), notamment en fil de cuivre isolé, l'isolant (5) du fil de bobinage (4) étant au moins partiellement fondu par chauffage après enroulement de la bobine (2), de manière à augmenter la flexibilité de la bobine (2) après chauffage.

7. Dispositif de circuit magnétique (1) selon l'une des revendications 1 à 6, **caractérisé en ce que** le noyau de bobine (3) est directement relié aux plaques polaires (8), notamment **en ce que** les extrémités (11) du noyau de bobine (3) sont soudées aux plaques polaires (8).

8. Procédé (100) de fabrication d'un dispositif de circuit magnétique pour un débitmètre magnéto-inductif, le dispositif de circuit magnétique comprenant une bobine avec un noyau de bobine et comprenant deux plaques polaires (8),
dans lequel, dans une étape de préparation (101), un noyau de bobine flexible est préparé,
dans lequel, dans une étape d'enroulement (102), N spires de fil de bobine isolé sont enroulées autour du noyau de bobine et
dans lequel, dans une étape de connexion (104), le noyau de bobine est connecté aux plaques polaires.

9. Procédé (100) selon la revendication 8, **caractérisé en ce que**, lors d'une étape de chauffage (103), la bobine est chauffée de manière à faire fondre au moins partiellement l'isolation du fil de bobine.

10. Procédé (100) selon la revendication 9, **caractérisé en ce que** l'étape de chauffage (103) est réalisée par passage d'un courant à travers le fil de la bobine (103') ou par chauffage par induction (103").

11. Procédé (100) selon l'une des revendications 8 à 10, **caractérisé en ce que**, lors d'une étape supplémentaire de pliage (105), le dispositif de circuit magnétique est plié d'une première forme à une deuxième forme.

12. Procédé (100) selon l'une des revendications 8 à 11, **caractérisé en ce que**, lors d'une étape de fixation (106), le dispositif de circuit magnétique, notamment les extrémités du noyau de la bobine, est fixé dans une forme finale par un moyen de fixation.
